# EUROPEAN PATENT SPECIFICATION

(11) **EP 3 363 717 B1**
(45) Date of publication and mention of the grant of the patent: **27.05.2020**
(21) Application number: 18382063.8
(22) Date of filing: 06.02.2018
(51) Int. Cl.: B62D 63/06

(54) **CARGO TRAILER**
LASTANHÄNGER
REMORQUE À MARCHANDISES

(30) Priority: 17.02.2017 ES 201730199
(43) Date of publication of application: 22.08.2018
(73) Proprietor: Pala Sibila Asociados Consultores, S.L., 08006 Barcelona (ES)
(72) Inventor: Losantos Sistach, Josep Maria, 08006 Barcelona (ES); Pala Sibila, Manuel, 08006 Barcelona (ES)
(74) Representative: Isern Patentes y Marcas S.L.

(56) References cited:
- RU-C1- 2 578 653
- US-B1- 7 891 697

## Description

### OBJECT OF THE INVENTION

The object of the present application is the registration of a cargo trailer.

More specifically, the invention proposes the development of a cargo trailer to be transported by a tractor vehicle, which enables increasing the useful loading surface area thereof in an easy and simple way for the user, by means of a single action.

### BACKGROUND OF THE INVENTION

Currently, a wide variety of trailers can be found on the market, coupled to a tractor vehicle, such as a motor vehicle, which are used for transporting bulky items, for example, motorcycles or other smaller vehicles. The problem associated with trailers made up of a single frame with a bulky top loading surface are known, because they take up a large amount of space when not being used.

In order to resolve the aforementioned problem, trailers that include additional structures have been developed, such as, for example, those described in patents ES 2585602, US 2005184485 and US 5924836. The document US 7 891 697 B1 discloses all the features of the preamble of claim 1 and is considered as the closest prior art. However, while known trailers satisfactorily fulfill the function of increasing load, the way in which the loading surface extension is carried out can be cumbersome and require longer installation for the user. Furthermore, another detected drawback is the fact that an additional lighting system or signals have to be placed on the trailer extension, which also implies greater assembly complexity for the user.

The applicant is currently unaware of the existence of an invention that has all the characteristics described herein.

### DESCRIPTION OF THE INVENTION

The present invention has been developed with the aim of providing a cargo trailer that constitutes a novelty within the field of application, and solves the aforementioned drawbacks while also contributing other additional advantages, which will become evident from the description provided below.

It is therefore the object of the present invention to provide a cargo trailer of the type comprising a main frame with a drawbar, at least one pair of displacement wheels linked to the main frame, the main frame having a loading surface. Particularly, the invention is characterized by the fact that it has an extendable section with an additional loading surface linked to an additional frame, displaceable with respect to the main frame, the extendable section being intended for extending the loading surface, such that in a functional position of the trailer, the loading surface of the frame is aligned with the additional surface, while in a second functional position, both loading surfaces are superimposed on each other, the extendable section being pivotally articulated in the additional frame by rotation means, such that the rotating movement of the extendable section is transformed into a linear forward or reverse movement of the additional frame with respect to the main frame, which enables reducing the manual effort required by the user.

As a result of these characteristics, a cargo trailer is obtained that enables increasing the useful loading surface thereof according to the needs of the user in a very simple way and without having to assemble or disassemble any component, since the user simply has to carry out an action of rotating the extendable section in order to also deploy the frame located on the bottom thereof, and the user can carry out this action using one hand and without applying great effort. The fact that it is simple and easy reduces the time required for assembly and/or disassembly of the extension of the useful loading surface.

Another equally important advantage is the fact that in the event of mandatory use of lighting and indicator lights on the trailer, it is not necessary to have two sets of lights or disassemble them should the dimensions of the trailer be extended since they can only be placed on the additional frame, such that in any of the two positions of the extendable section, the rear of the trailer corresponds to the rear end of the additional frame.

According to another aspect of the invention, guiding means are provided for linear displacement between the main frame and the additional frame.

In a preferred embodiment, the aforementioned guiding means can comprise at least one sliding rail system, such that a slide coupled to the additional frame can be displaced along a guide rail located in the main frame.

Preferably, the guiding means comprise two sliding rail systems each arranged on two sides opposite each other.

According to another aspect of the invention, the rotating means have at least one bar, which is coupled at one end in the extendable section while the opposite end of said bar is coupled to a crossbar forming part of the additional frame.

Additionally, the cargo trailer can comprise damping means arranged between the main frame and the extendable section, such as for example, a pair of gas springs with a hydraulic damper located on two sides such that it enables carrying out smoother and less strained movement during the deployment or retraction of the extendable section, which makes it easier for the user to handle the rotating system.

Advantageously, the trailer can include indicator lights mounted on the rear of the additional frame, which makes it possible to comply with traffic regulations.

According to another characteristic of the invention, the rear end of the main frame has support surfaces arranged perpendicularly with respect to the longitudinal axis of the main frame, such that it enables the trailer assembly (with the extendable section in a retracted position) to be placed in a vertical position, which advantageously enables reducing the volume or space thereof when it is not being used.

According to a preferred embodiment of the invention, the support surfaces are arranged on each side of the main frame.

Advantageously, the additional frame includes gripping means configured for manual handling of the additional frame, such as for example, a pair of handholds located on both sides of the extendable section.

Other characteristics and advantages of the cargo trailer object of the present invention, will become clear in light of the description of a preferred, though non-exclusive, embodiment, which, by way of a non-limiting example, is illustrated in the accompanying drawings, wherein:

### BRIEF DESCRIPTION OF THE DRAWINGS

Figure 1 is a perspective view of the cargo trailer from above according to the present invention;
Figure 2 is a perspective view of the cargo trailer from below;
Figure 3 is a plan view of the trailer shown in Figures 1 and 2;
Figure 4 is a first side elevation view in cross section of the trailer of the invention along the A-A line, which includes an expanded detail view;
Figure 5 is a second side elevation view in cross section of the trailer of the invention along the B-B line, which includes an expanded detail view;
Figure 6 is a side elevation view of the trailer of the invention in a vertical and retracted position; and
Figure 7 is a sequence showing the operation of extending the additional frame with respect to the main frame of the cargo trailer of the invention.

### DESCRIPTION OF A PREFERRED EMBODIMENT

In light of the aforementioned figures and, in accordance with the adopted numbering, an example of a preferred embodiment of the invention can be observed therein, which comprises the parts and elements indicated and described in detail below.

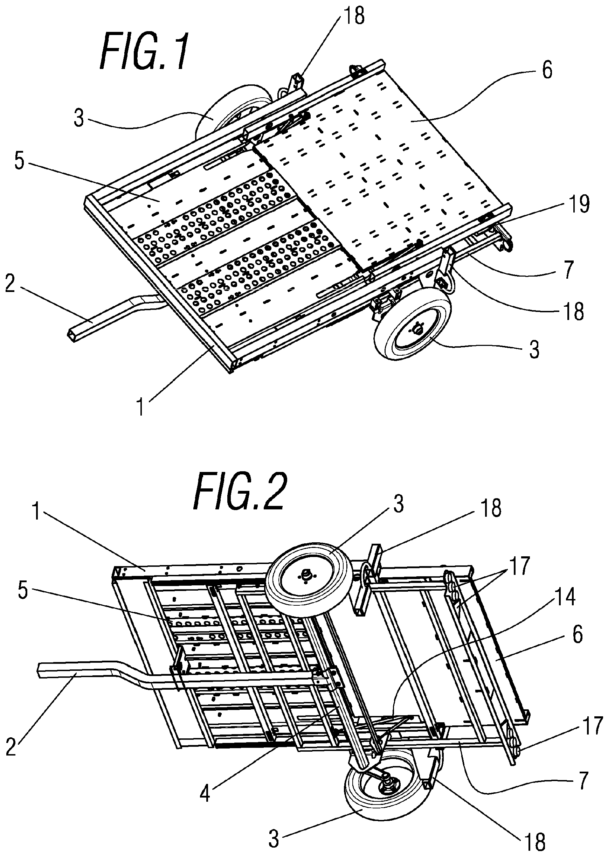

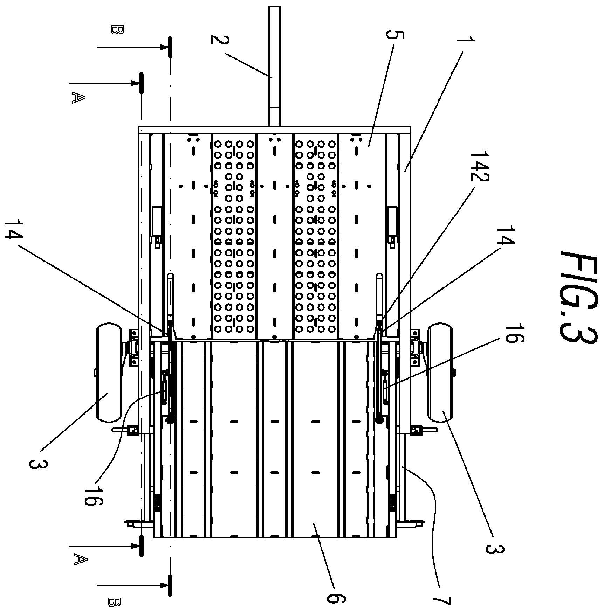

As shown in Figures 1 and 3, the present embodiment of the cargo trailer comprises a main frame (1) provided at the front end thereof with a drawbar (2) that projects from the main frame (1), a pair of displacement wheels (3) (although their number may exceed two) linked to the main frame by means of a wheel axle (4) supported on the bottom of the main frame (1) (see Figure 2). The main frame (1) comprises a plurality of metal profiles and crossbars on which a loading surface is arranged formed by a metal plate (5).

In this specification, the front end is understood as being the end facing a towing vehicle for transporting the trailer while the rear end corresponds to the opposite end.

The cargo trailer includes an extendable section (6) with an additional loading surface, which is linked to the additional frame (7), which is displaceable with respect to the main frame (1), the extendable section being intended for extending the loading surface, such that, in a functional position of the trailer, the loading surface of the main frame (1) can be aligned with the additional surface, while in a second functional position, both loading surfaces are superimposed on each other, the extendable section being pivotally articulated in the additional frame (7) by rotation means, which will be explained further on. Thus, the rotating movement of the extendable section (6) is transformed into a linear forward or reverse movement of the additional frame (7) associated with the extendable section (6) with respect to the main frame (1).

In order to ensure proper operation during deployment or retraction of the extendable section (6) and the additional frame (7), guiding means are provided for linear displacement between the main frame (1) and the additional frame (7). These guiding means comprise a pair of sliding rail systems separated from each other and located on two sides of the trailer, such that one slide coupled to the additional frame can be displaced along a guide rail located on the main frame (1).

At a more detailed level, the slide of the sliding rail system is comprised of a plurality of assemblies, generally indicated by reference number (8), arranged in an aligned manner, each of them consisting of a shaft (9) with a threaded section coupled to the additional frame (7) by means of a pair of nuts (10) that ensure fixation to the shaft (9). Furthermore, the shaft (9) provided at one end with a pair of wheels or rolling elements (11) supported on a support element (12) fixed to the shaft (9), said wheels (11) being configured to slide along a running surface provided inside a horizontal plane of the guide rail (13) as the extendable section pivots with respect to the main frame (1).

Now making particular reference to the rotation means for angularly moving the extendable section (6), they have a pair of bars (14) located on two sides of the main frame (1), each of the bars (14) being pivotally coupled at one end to a pivoting point (141) located on the extendable section, while at the opposite end, said bar (14) it is coupled to a second pivoting point (142) located on a crossbar (15) that forms part of the additional frame (7).

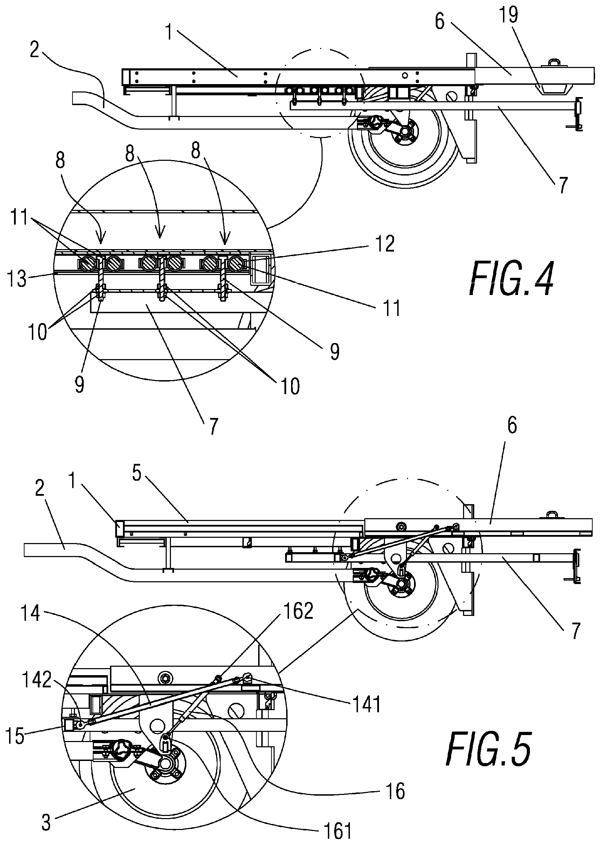

In order to facilitate and smooth the pivoting movement of the extendable section (6) while it is being handled for deployment or retraction thereof, a pair of conventional gas springs with a hydraulic damper (16) are provided, one of the ends of the gas spring (16) being fixed to a pivoting point (161) of the main frame (1) and the other end being fixed to a pivoting point (162) of the extendable section (6), as more clearly shown in Figure 5.

The trailer further includes lighting lights and direction change indicators (17), which are mounted on the rear of the additional frame (7), thereby enabling use in any of the functional positions in which the extendable section is positioned (6).

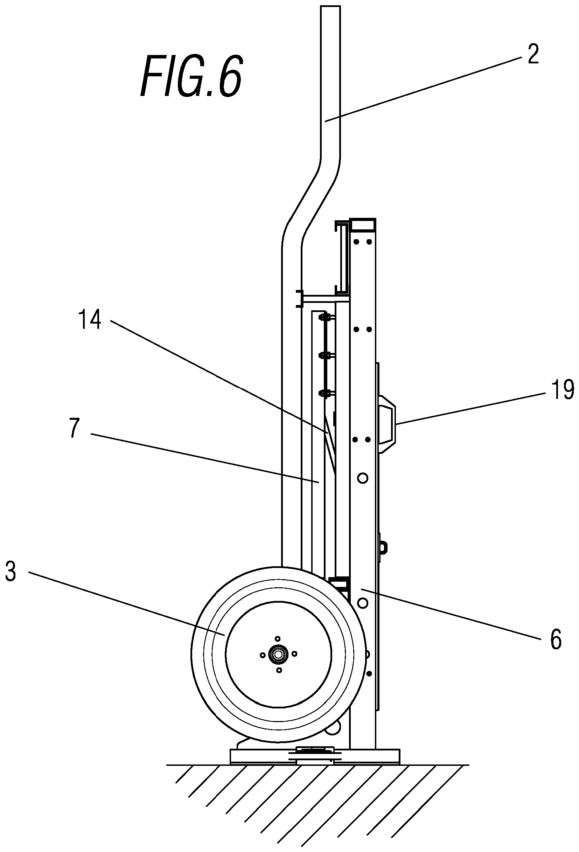

The rear end of the main frame (1) has a pair of flat support surfaces that are arranged perpendicularly with respect to the longitudinal axis of the main frame, which enables placing the trailer in a vertical position, as shown in Figure 6. These surfaces are provided with two short tubular profiles (18) with a rectangular cross section. These two profiles are located on each side of the main frame.

Furthermore, as shown in Figure 1, the additional frame can include a pair of handholds (19) located on profiles arranged on both sides of one of the faces of the extendable section (6), such that they enable the user manual handling of the additional frame with a single hand.

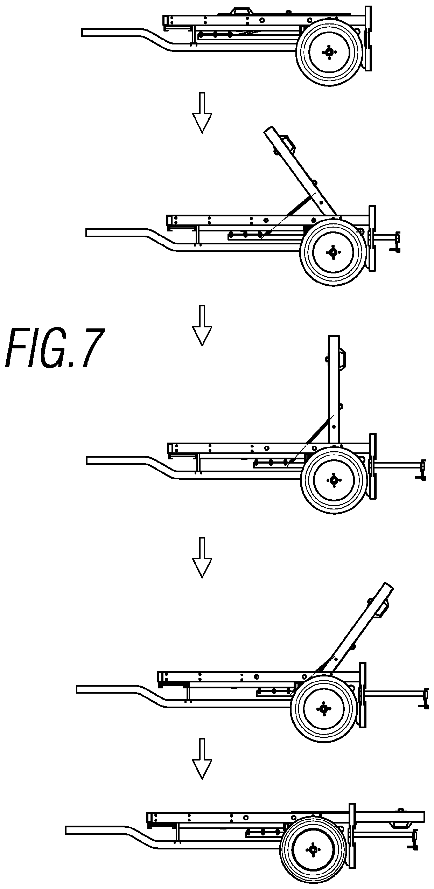

Figure 7 shows a sequence of the movement carried out by the additional frame and the extendable section, wherein the additional loading surface is arranged, such that the rotating movement carried out by the extendable section can be seen, as the additional frame moves linearly in a direction opposite to the trailer's direction of travel in order to increase the total useful loading surface. In order to carry out the inverse operation, i.e., retracting the extendable section, it will suffice to carry out the same operation in the opposite direction.

The details, shapes, dimensions and other accessory elements used to manufacture the cargo trailer of the invention may be suitably substituted for others that do not diverge from the scope defined by the claims included below.

## Claims

1. A cargo trailer comprising a main frame with a drawbar (2), at least a pair of displacement wheels (3) linked to the main frame (1), the main frame (1) having a loading surface, wherein the cargo trailer includes an extendable section (6) with an additional loading surface linked to an additional frame (7) displaceable with respect to the main frame (1), the extendable section (6) being intended for extending the loading surface, such that in a functional position of the trailer, the loading surface of the frame is aligned with the additional surface, while in a second functional position, both loading surfaces are superimposed on each other, **characterized in that** the extendable section (6) is pivotally articulated in the additional frame (7) by rotation means, such that the rotating movement of the extendable section (6) is transformed into a linear forward or reverse movement of the additional frame (7) with respect to the main frame (1).

2. The cargo trailer according to claim 1, **characterized in that** guiding means are provided for linear displacement between the main frame (1) and the additional frame (7).

3. The cargo trailer according to claim 2, **characterized in that** said guiding means comprise at least one sliding rail system, such that one slide coupled to the additional frame (7) can be displaced along a guide rail located in the main frame (1).

4. The cargo trailer according to claim 3, **characterized in that** the guiding means comprise two sliding rail systems each arranged on two sides opposite each other.

5. The cargo trailer according to any of claims 3 and 4 **characterized in that** the slide is comprised of a shaft coupled to the additional frame (7), the shaft being provided with wheels configured to slide along a running surface provided on the guide rail.

6. The cargo trailer according to any of the preceding claims, **characterized in that** the rotation means have at least one bar (14), which is coupled at one end to the extendable section (6) while at the opposite end, said bar is coupled on a crossbar that forms part of the additional frame (7).

7. The cargo trailer according to claim 1, **characterized in that** it comprises damping means arranged between the main frame (1) and the extendable section (6), configured to smooth the rotating movement of the extendable section (6).

8. The cargo trailer according to claim 7, **characterized in that** the damping means comprise gas springs with a hydraulic damper, one of the ends of the gas springs (16) being fixed to a pivoting point (161) of the main frame (1) and the opposite end being fixed to a pivoting point (162) of the extendable section (6).

9. The cargo trailer according to any of the preceding claims, **characterized in that** it includes indicator lights mounted on the rear end of the additional frame (7).

10. The cargo trailer according to any of the preceding claims, **characterized in that** the rear end of the main frame (1) has flat support surfaces that are arranged perpendicularly with respect to the longitudinal axis of the main frame (1).

11. The cargo trailer according to claim 10, **characterized in that** the support surfaces are arranged on each side of the main frame (1).

12. The cargo trailer according to any of the preceding claims, **characterized in that** the additional frame (7) includes gripping means configured to enable manual handling of the additional frame (7).

13. The cargo trailer according to claim 12, **characterized in that** the gripping means comprise a pair of handholds (19) located on both sides of the extendable section (6).

## Patentansprüche

1. Lastanhänger, umfassend einen Hauptrahmen mit einer Deichsel (2), mindestens ein Paar Verschiebungsräder (3), die mit dem Hauptrahmen (1) verbunden sind, wobei der Hauptrahmen (1) eine Ladefläche aufweist, wobei der Lastanhänger einen ausfahrbaren Abschnitt (6) mit einer zusätzlichen Ladefläche einschließt, die mit einem zusätzlichen Rahmen (7) verbunden ist, der in Bezug auf den Hauptrahmen (1) verschiebbar ist, wobei der ausfahrbare Abschnitt (6) zum Ausfahren der Ladefläche vorgesehen ist, so dass in einer Funktionsposition des Anhängers die Ladefläche des Rahmens mit der zusätzlichen Fläche ausgerichtet ist, während in einer zweiten Funktionsposition beide Ladeflächen übereinander liegen,
**dadurch gekennzeichnet, dass** der ausfahrbare Abschnitt (6) durch Drehmittel in dem zusätzlichen Rahmen (7) schwenkbar angelenkt ist, so dass die Drehbewegung des ausfahrbaren Abschnitts (6) in eine lineare Vorwärts- oder Rückwärtsbewegung des zusätzlichen Rahmens (7) in Bezug auf den Hauptrahmen (1) umgewandelt wird.

2. Lastanhänger nach Anspruch 1, **dadurch gekennzeichnet, dass** Führungsmittel zur linearen Verschiebung zwischen dem Hauptrahmen (1) und dem zusätzlichen Rahmen (7) bereitgestellt sind.

3. Lastanhänger nach Anspruch 2, **dadurch gekennzeichnet, dass** die Führungsmittel mindestens ein Gleitschienensystem umfassen, so dass ein mit dem zusätzlichen Rahmen (7) gekoppelter Schlitten entlang einer im Hauptrahmen (1) befindlichen Führungsschiene verschoben werden kann.

4. Lastanhänger nach Anspruch 3, **dadurch gekennzeichnet, dass** die Führungsmittel zwei Gleitschienensysteme umfassen, die jeweils auf zwei einander gegenüberliegenden Seiten angeordnet sind.

5. Lastanhänger nach einem der Ansprüche 3 und 4, **dadurch gekennzeichnet, dass** der Schlitten aus einer Welle besteht, die mit dem zusätzlichen Rahmen (7) gekoppelt ist, wobei die Welle mit Rädern versehen ist, die konfiguriert sind, entlang einer auf der Führungsschiene bereitgestellten Lauffläche zu gleiten.

6. Lastanhänger nach einem der vorhergehenden Ansprüche, **dadurch gekennzeichnet, dass** die Drehmittel mindestens eine Stange (14) aufweisen, die an einem Ende mit dem ausfahrbaren Abschnitt (6) gekoppelt ist, während die Stange am gegenüberliegenden Ende an einer Querstange gekoppelt ist, die einen Teil des zusätzlichen Rahmens (7) bildet.

7. Lastanhänger nach Anspruch 1, **dadurch gekennzeichnet, dass** es Dämpfungsmittel umfasst, die zwischen dem Hauptrahmen (1) und dem ausfahrbaren Abschnitt (6) angeordnet und konfiguriert sind, die Drehbewegung des ausfahrbaren Abschnitts (6) zu glätten.

8. Lastanhänger nach Anspruch 7, **dadurch gekennzeichnet, dass** die Dämpfungsmittel Gasfedern mit einem hydraulischen Dämpfer umfassen, wobei eines der Enden der Gasfedern (16) an einem Schwenkpunkt (161) des Hauptrahmens (1) befestigt ist und das gegenüberliegende Ende an einem Schwenkpunkt (162) des ausfahrbaren Abschnitts (6) befestigt ist.

9. Lastanhänger nach einem der vorhergehenden Ansprüche, **dadurch gekennzeichnet, dass** er Anzeigelampen einschließt, die am hinteren Ende des zusätzlichen Rahmens (7) angebracht sind.

10. Lastanhänger nach einem der vorhergehenden Ansprüche, **dadurch gekennzeichnet, dass** das hintere Ende des Hauptrahmens (1) flache Stützflächen aufweist, die senkrecht zur Längsachse des Hauptrahmens (1) angeordnet sind.

11. Lastanhänger nach Anspruch 10, **dadurch gekennzeichnet, dass** die Stützflächen auf jeder Seite des Hauptrahmens (1) angeordnet sind.

12. Lastanhänger nach einem der vorhergehenden Ansprüche, **dadurch gekennzeichnet, dass** der zusätzliche Rahmen (7) Greifmittel einschließt, die konfiguriert sind, eine manuelle Handhabung des zusätzlichen Rahmens (7) zu ermöglichen.

13. Lastanhänger nach Anspruch 12, **dadurch gekennzeichnet, dass** die Greifmittel ein Paar Haltegriffe (19) umfassen, die sich auf beiden Seiten des ausfahrbaren Abschnitts (6) befinden.

## Revendications

1. Remorque à cargaison comprenant un châssis principal avec une barre d'attelage (2),
au moins une paire de roues de déplacement (3) reliées au châssis principal (1), le châssis principal (1) ayant une surface de chargement, dans laquelle la remorque à cargaison comporte une section extensible (6) avec une surface de chargement supplémentaire reliée à un châssis supplémentaire (7) déplaçable par rapport au châssis principal (1), la section extensible (6) étant destinée à étendre la surface de chargement, de sorte que dans une position fonctionnelle de la remorque, la surface de chargement du châssis est alignée avec la surface supplémentaire, tandis que dans une deuxième position fonctionnelle, les deux surfaces de chargement se superposent, **caractérisée en ce que** la section extensible (6) est articulée de manière pivotante dans le châssis supplémentaire (7) par des moyens de rotation, de sorte que le mouvement de rotation de la section extensible (6) se transforme en un mouvement linéaire vers l'avant ou vers l'arrière du châssis supplémentaire (7) par rapport au châssis principal (1).

2. Remorque à cargaison selon la revendication 1, **caractérisée en ce que** des moyens de guidage sont prévus pour un déplacement linéaire entre le châssis principal (1) et le châssis supplémentaire (7).

3. Remorque à cargaison selon la revendication 2, **caractérisée en ce que** lesdits moyens de guidage comprennent au moins un système de rails coulissants, de sorte qu'une glissière couplée au châssis supplémentaire (7) peut être déplacée le long d'un rail de guidage situé dans le châssis principal (1).

4. Remorque à cargaison selon la revendication 3, **caractérisée en ce que** les moyens de guidage comprennent deux systèmes de rails coulissants disposés chacun sur deux côtés opposés l'un à l'autre.

5. Remorque à cargaison selon l'une quelconque des revendications 3 et 4, **caractérisée en ce que** la glissière est constituée d'un arbre couplé au châssis supplémentaire (7), l'arbre étant pourvu de roues configurées pour coulisser le long d'une surface de roulement prévue sur le rail de guidage.

6. Remorque à cargaison selon l'une quelconque des revendications précédentes, **caractérisée en ce que** les moyens de rotation ont au moins une barre (14), qui est couplée à une extrémité à la section extensible (6) tandis qu'à l'extrémité opposée, ladite barre est couplée sur une barre transversale qui fait partie du châssis supplémentaire (7).

7. Remorque à cargaison selon la revendication 1, **caractérisée en ce qu'**elle comprend des moyens d'amortissement disposés entre le châssis principal (1) et la section extensible (6), configurée pour assouplir le mouvement de rotation de la section extensible (6).

8. Remorque à cargaison selon la revendication 7, **caractérisée en ce que** les moyens d'amortissement comprennent des ressorts à gaz avec un amortisseur hydraulique, l'une des extrémités des ressorts à gaz (16) étant fixée à un point pivotant (161) du châssis principal (1) et l'extrémité opposée étant fixée à un point pivotant (162) de la section extensible (6).

9. Remorque à cargaison selon l'une quelconque des revendications précédentes, **caractérisée en ce qu'**elle comporte des voyants lumineux montés à l'extrémité arrière du châssis supplémentaire (7).

10. Remorque à cargaison selon l'une quelconque des revendications précédentes, **caractérisée en ce que** l'extrémité arrière du châssis principal (1) a des surfaces de support plates qui sont disposées perpendiculairement par rapport à l'axe longitudinal du châssis principal (1).

11. Remorque à cargaison selon la revendication 10, **caractérisée en ce que** les surfaces de support sont disposées de chaque côté du châssis principal (1).

12. Remorque à cargaison selon l'une quelconque des revendications précédentes, **caractérisée en ce que** le châssis supplémentaire (7) comporte des moyens de préhension configurés pour permettre une manipulation manuelle du châssis supplémentaire (7).

13. Remorque à cargaison selon la revendication 12, **caractérisée en ce que** les moyens de préhension comprennent une paire de poignées (19) situées des deux côtés de la section extensible (6).
